# EUROPÄISCHE PATENTSCHRIFT

(11) **EP 2 888 069 B1**
(45) Veröffentlichungstag und Bekanntmachung des Hinweises auf die Patenterteilung: **28.11.2018**
(21) Anmeldenummer: 13779569.6
(22) Anmeldetag: 17.10.2013
(51) Int. Cl.: B23K 11/00, F22B 37/10

(54) **WIDERSTANDSPUNKTSCHWEISSAPPARAT**
SPOT WELDING DEVICE
APPAREIL DE SOUDAGE PAR POINTS

(30) Priorität: 31.10.2012 DE 102012219898
(43) Veröffentlichungstag der Anmeldung: 01.07.2015
(73) Patentinhaber: Siemens Aktiengesellschaft, 80333 München (DE)
(72) Erfinder: BRÜCKNER, Jan, 91080 Uttenreuth (DE); EFFERT, Martin, 91058 Erlangen (DE)
(86) Internationale Anmeldenummer: PCT/EP2013/071762
(87) Internationale Veröffentlichungsnummer: WO 2014/067794

(56) Entgegenhaltungen:
- EP-A1- 2 390 039
- US-A- 4 239 953

## Beschreibung

Die Erfindung betrifft einen Widerstandspunktschweißapparat zum Fixieren eines Dralleinbaukörpers in Dampferzeugerrohren gemäß dem Oberbegriff des Anspruchs 1 (siehe US-A-4 239 953). Beim Widerstandsschweißen werden die zu verbindenden Bauteile zusammengepresst und an der Kontaktstelle zwischen den Bauteilen durch den Schweißstrom elektrisch aufgeschmolzen.
Am Bedeutendsten ist in der Praxis dabei das Widerstandspunktschweißen, bei dem die punktförmigen Elektroden der Schweißzange die zu verbindenden Bauteile direkt aneinanderpressen. Notwendige Komponenten der Widerstandsschweißtechnik sind eine Schweißzange mit den Schweißelektroden, eine mit der Schweißzange verbundene Schweißstromquelle mit Schweißtransformator, sowie eine Schweißsteuerung und ggf. ein Prozessüberwachungssystem zum entsprechenden Steuern des Schweißvorgangs.
Üblicherweise werden dabei beim Widerstandspunktschweißen die zu fügenden Teile an den beiden Schweißelektroden pneumatisch mit einer vorgegebenen Kraft zusammengepresst. Anschließend wird für die Dauer der Schweißzeit der Schweißstrom eingeschaltet. Der elektrische Widerstand an der Kontaktstelle zwischen den beiden Teilen ist dabei wesentlich größer als der eigentliche elektrische Widerstand der Werkstoffe der zu fügenden Teile. Durch die dadurch erzielte punktuelle thermoelektrische Erwärmung über den Kontaktwiderstand entsteht so eine linsenförmige Schmelze. Das gleichzeitige Andrücken über die Elektrodenkraft bewirkt eine punktförmige stoffschlüssige und unlösbare Verbindung. Während einer Nachhaltezeit wird die Elektrodenkraft aufrechterhalten, um so das Abkühlen der Schmelze unter Vermeidung von Porenbildung sicherzustellen.

Dampferzeugerrohre mit einem drallerzeugenden Einbaukörper kommen dann zur Anwendung, wenn der Strömung des Strömungsmediums eine höhere Geschwindigkeit an der Innenfläche der Dampferzeugerrohre aufgezwungen werden soll. Der Einsatz von solchen innenberippten Rohren kann dabei aus verschiedenen Gründen erforderlich werden, so z. B. bei einer niedrigen Massenstromdichte des Verdampfers unter Volllast einer Kraftwerksanlage. Auch bei hohen Wärmestromdichten kann die Verwendung von innenberippten Rohren erforderlich sein. Hier besteht nämlich die Gefahr vom Filmsieden, das heißt, es bildet sich auf der Innenseite der Dampferzeugerrohre ein Dampffilm, der im Gegensatz zur gut durchmischten Flüssigkeit beim Blasensieden eine hohe wärmeisolierende Wirkung hat. Dies hat zur Folge, dass bei gleichbleibender Wärmestromdichte die Wandtemperatur stark ansteigen kann, was dann wiederum zur Zerstörung der Heizflächen führen kann. Nicht zuletzt kann durch die innenberippten Rohre eine Strömungsschichtung (Trennung der Wasser- und Dampfphase) im normalen Lastbetrieb vermieden werden.

Die EP 2 390 567 A1 beschreibt ein Verfahren, bei dem ein drallerzeugender Einbaukörper in Nuten einer Schablonenwelle fixiert wird, die Schablonenwelle dann mit dem Einbaukörper in ein Dampferzeugerrohr eingeführt wird, die Fixierung des Einbaukörpers an der Schablonenwelle gelöst wird und anschließend die Schablonenwelle wieder aus dem Dampferzeugerrohr entfernt wird.

Die EP 2 390 039 A1 beschreibt eine Vorrichtung und ein Verfahren zum stoffschlüssigen Fixieren eines solchen drallerzeugenden Einbaukörpers in einem Dampferzeugerrohr mittels Schutzgasschweißen.

Aufgabe der Erfindung ist es, einen Widerstandspunktschweißapparat zum Fixieren eines Dralleinbaukörpers in Dampferzeugerrohren bereitzustellen.

Diese Aufgabe wird mit dem Widerstandspunktschweißapparat mit den Merkmalen des Anspruchs 1 gelöst.

Mit dem erfindungsgemäßen Widerstandspunktschweißapparat kann dabei im Gegensatz zum Schutzgasschweißen, ein Anbringen des Dralleinbaukörpers mit weniger Aufwand erfolgen. Durch die erfindungsgemäße Ausbildung des Schweißkopfes kann an jeder beliebigen Stelle des Dampferzeugerrohres der Dralleinbaukörper mit der Innenwandung des Dampferzeugerrohres mittels Widerstandspunktschweißen stoffschlüssig und unlösbar verbunden werden. Anschließend wird das Wirkorgan - das erfindungsgemäß vorzugsweise als Hydraulikzylinder ausgebildet ist - deaktiviert, so dass der Schweißkopf im Dampferzeugerrohr hin zur nächsten Punktschweißstelle bewegt werden kann. Für eine besonders effektive Punktschweißung besteht die Lanze des Widerstandspunktschweißapparates vorteilhafterweise aus Kupfer mit seinen hervorragenden Stromleitereigenschaften und die nicht verschleißfreie Punktschweißelektrode ist austauschbar.

Ist der Schweißkopf gleich am Ende eines als Schablonenwelle zum Einführen des Einbaukörpers in das Dampferzeugerrohr ausgeführten Schafts angeordnet, können die Schritte Einführen des Einbaukörpers in das Dampferzeugerrohr und Befestigen des Einbaukörpers mit dem gleichen erfindungsgemäß ausgebildeten Widerstandspunktschweißapparat durchgeführt werden.

Die Erfindung soll nun anhand der folgenden Figuren beispielhaft erläutert werden. Es zeigen:
- FIG 1: ein Querschnitt durch einen Schweißkopf,
- FIG 2: eine Widerstandspunktschweißapparat.

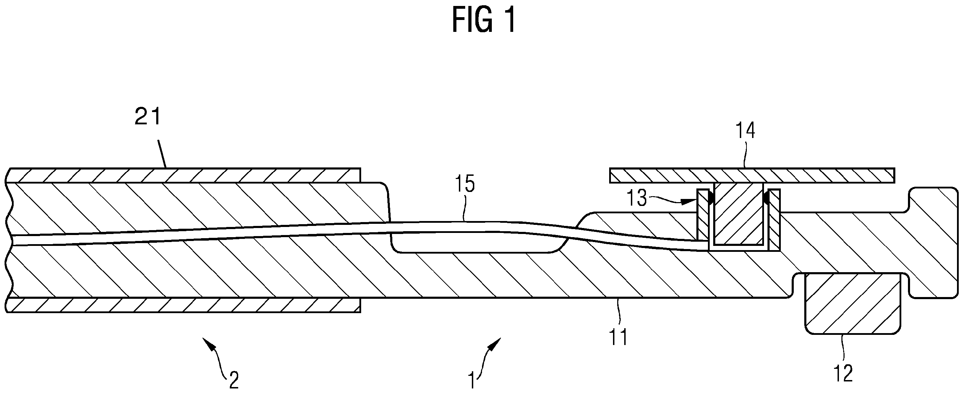

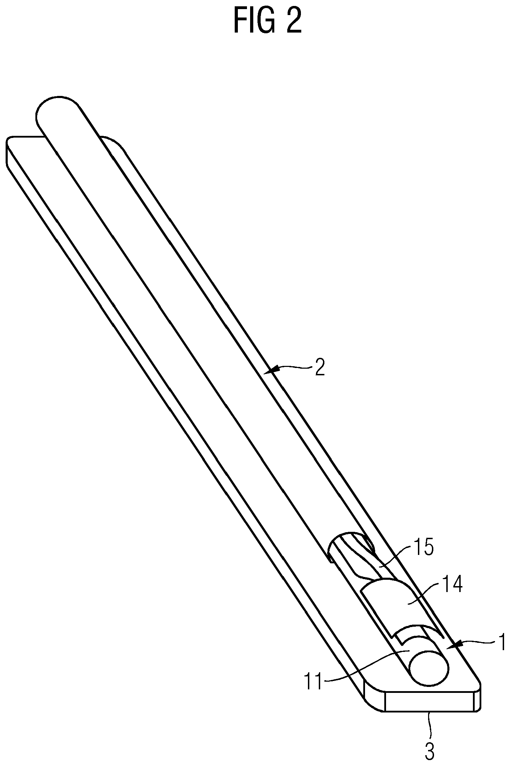

Der in FIG 1 im Querschnitt gezeigte Schweißkopf zum Fixieren eines Dralleinbaukörpers auf einer Innenwandung eines Dampferzeugerrohrs weist erfindungsgemäß eine weitgehend zylindrisch ausgebildete Lanze 11 aus einem elektrisch leitenden Material (vorzugsweise Kupfer), eine aus der Lanze 11 in radialer Richtung hervorstehende Punktschweißelektrode 12, ein Wirkorgan 13 und einem der Punktschweißelektrode 12 in radialer Richtung gegenüberliegenden und von dem Wirkorgan 13 in Richtung der Innenwandung des Dampferzeugerrohres bewegbaren Isolationskörper 14 auf. Die Lanze 11 ist dabei in einem definierten Abstand vom Schweißkopfende so verjüngt, dass der Isolationskörper 14 und damit auch die Punktschweißelektrode 12 den Dralleinbaukörper an die Innenwandung des Dampferzeugerrohres drücken, wenn das Wirkorgan 13 aktiviert ist. Bei dem in FIG 1 dargestellten Ausführungsbeispiel ist das Wirkorgan 13 ein Hydraulikzylinder der quer zur Achse der zylindrischen Lanze in diese eingebettet ist. Über eine Zuleitung kann Hydraulikflüssigkeit aus einem nicht näher dargestellten Druckspeicher oder auch einer Hydraulikpumpe über eine Zuleitung 15 in den Hydraulikzylinder 13 eingebracht werden und so der im Hydraulikzylinder eingebrachte Hydraulikkolben ausgelenkt werden. Mit dem Hydraulikkolben verbunden ist der Isolationskörper 14. Wird nun Hydraulikflüssigkeit über die Zuleitung 15 in den Hydraulikzylinder gepumpt, bewegt sich der Hydraulikkolben aus diesem heraus und bewegt somit den Isolationskörper 14 in Richtung der Innenwandung eines über den Schweißkopf gestülpten Dampferzeugerrohres. Dabei wird zuerst ein zuvor in das Dampferzeugerrohr mittels einer Schablonenwelle einbrachter Dralleinbaukörper vom Isolationskörper 14 gegen die Innenwandung gedrückt. Mit zunehmender Bewegung des Hydraulikkolbens aus dem Hydraulikzylinder heraus, wird sich nun auch die Lanze 11 an der Verjüngungsstelle biegen und so den Teil der Lanze 11 der am Kopfende die Punktschweißelektrode 12 beinhaltet in Richtung der Innenwandung auslenken. Dadurch drückt die Punktschweißelektrode nun auch auf der dem Isolationskörper 14 gegenüberliegenden Seite den Dralleinbaukörper gegen die Rohrinnenwand. Wird dann an der Lanze 11 ein Schweißstrom aufgeprägt, kann dieser über die Punktschweißelektrode 12 durch das Dampferzeugerrohr hindurch zu einer außerhalb des Dampferzeugerrohres angeordneten Gegenelektrode 3 fließen (siehe FIG 2) und so an der Stelle an der die Punktschweißelektrode 12 an den Dralleinbaukörper andrückt eine stoffschlüssige Verbindung zwischen dem Dralleinbaukörper und dem Dampferzeugerrohr erfolgen. Dadurch, dass der Hydraulikzylinder 13 unter Druck steht verliert die Punktschweißelektrode 12 während des Schweißkontaktes nicht den Kontakt zu dem verflüssigten und weich gewordenem Material des Einbaukörpers. Damit dieser Kontakt beim Schweißvorgang dauerfest ist, muss die Verjüngung der Lanze 11 so bemessen sein, dass die durch das Wirkorgan 13 bewirkte gegenläufige Auslenkung von Lanze 11 und Isolationskörper 14 zu einer dauerfesten Anpressung der Punktschweißelektrode 12 an den Dralleinbaukörper führt. Ist der Schweißvorgang abgeschlossen, wird die Hydraulikflüssigkeit wieder aus dem Hydraulikzylinder 13 entfernt, der Hydraulikkolben taucht wieder mehr in den Hydraulikzylinder 13 ein und damit bewegen sich Isolationskörper 14 und Lanze 11 wieder weg von der Innenwandung und hin zur Achse des Schweißkopfes 1. Der Schweißkopf 1 kann dann zur nächsten Stelle im Dampferzeugerrohr geführt werden um anschließend den Schweißvorgang an dieser Stelle zu wiederholen. So kann schrittweise eine sichere und stoffschlüssige Befestigung von Dralleinbaukörpern in Dampferzeugerrohren erreicht werden.

FIG 2 zeigt in perspektivischer Darstellung die wesentlichen Bestandteile des Widerstandspunktschweißapparats, hier den isolierten Schaft 2 mit Schweißkopf 1 über den von vorne von der Stirnseite des Schweißkopfes ein Dampferzeugerrohre gestülpt werden kann, sowie die darunter angeordnete flächige Gegenelektrode 3, die mit dem über den Schaft 2 und Schweißkopf 1 gestülpten Dampferzeugerrohr in Kontakt sein muss, um so beim Schweißvorgang einen sicheren Stromfluss zwischen Punktschweißelektrode und Gegenelektrode zu gewährleisten. Die Isolierung des Schafts 2 erfolgt hier durch ein Isolationsrohr, das die elektrischen und hydraulischen Zuführungen für den Schweißkopf 1 umgibt. Gleichzeitig dient das Isolationsrohr als Führungshilfe für den Schweißkopf 1 im Dampferzeugerrohr und sollte daher in etwa einen Außendurchmesser aufweisen, der etwas kleiner als der freie Innendurchmesser der Dampferzeugerrohre mit eingebrachten Dralleinbaukörpern ist.

Zum Verschweißen des mit einer Schablonenwelle in ein Dampferzeugerrohr eingebrachten Dralleinbaukörpers mit dessen Innenwandung, folgt der Schweißkopf 1 der Schablonenwelle beim Herausdrehen aus dem Dampferzeugerrohr in kurzem Abstand von der Gegenseite. Der Dralleinbaukörper ist vorzugsweise ein spiralförmiges drahtartiges Gebilde, das zum Einbringen in das Dampferzeugerrohr in den Nuten der Schablonenwelle fixiert ist. Da dieses Gebilde eine gewisse Eigenspannung aufweist und sich damit an die Innenwandung des Dampferzeugerrohres anlegt, ist die Position des Dralleinbaukörpers auch noch kurz nach dem Herausdrehen aus den Nuten mit geringen Toleranzen bekannt. Wird beim Einfahren des Schweißkopfes ein erster Schweißpunkt festgelegt, so können alle weiteren Schweißpunkte mit Hilfe des Vortriebs des Schweißkopfes anhand der bekannten Geometrie des Dralleinbaukörpers bestimmt werden. Erfolgen das Einfahren des Schweißkopfes und die Durchführung der Widerstandspunktschweißung gleichzeitig mit dem Herausdrehen der Schablonenwelle, so sind besonders geringe Toleranzen der Lage des Einbaukörpers in dem Dampferzeugerrohr zu erwarten. Darüber hinaus kann der Fertigungsprozess auf diese Weise beschleunigt werden.

Wird im Gegensatz der Schaft bereits selbst als Schablonenwelle zum Einführen des Einbaukörpers in das Dampferzeugerrohr ausgebildet, kann gleichzeitig mit dem Herausfahren der Schablonenwelle die Verschweißung des Dralleinbaukörpers im Dampferzeugerrohr erfolgen.

Insgesamt ergeben sich durch den erfindungsgemäßen Widerstandspunktschweißapparat die folgenden Vorteile. Mit dem beschriebenen Schweißapparat können an beliebigen Stellen im Dampferzeugerrohr der Dralleinbaukörper mit diesem verschweißt werden. Die Positionierung des Schweißpunktes erfolgt nur über die Position des Schweißkopfes innerhalb des Dampferzeugerrohres. Die Lage des Dralleinbaukörpers ist aufgrund der Position des ersten Schweißpunktes und der Geometrie des Einbaukörpers (Anzahl der Drähte und Steigung) bekannt. Da die Lage des Dralleinbaukörpers in dem Dampferzeugerrohr bekannt ist, muss die Position nicht vor jedem Schweißvorgang exakt bestimmt werden. Im Vergleich zum Schutzgasschweißverfahren ist eine deutliche Verkürzung der Montagezeit zu erwarten.

## Patentansprüche

1. Widerstandspunktschweißapparat zum Fixieren eines Dralleinbaukörpers auf einer Innenwandung eines Dampferzeugerrohrs, mit einem in das Dampferzeugerrohr einführbaren Schweißkopf (1) umfassend eine weitgehend zylindrisch ausgebildete Lanze (11) aus einem elektrisch leitenden Material, eine aus der Lanze (11) in radialer Richtung hervorstehende Punktschweißelektrode (12), ein Wirkorgan (13) und einem der Punktschweißelektrode (12) in radialer Richtung gegenüberliegenden und von dem Wirkorgan (13) in Richtung der Innenwandung bewegbaren Isolationskörper (14), **dadurch gekennzeichnet, dass** die Lanze (11) in einem definierten Abstand vom Schweißkopfende so verjüngt ist, dass der Isolationskörper (14) und damit auch die Punktschweißelektrode (12) durch Biegung der Verjüngungstelle den Dralleinbaukörper an die Innenwandung des Dampferzeugerrohres drücken, wenn das Wirkorgan (13) aktiviert ist, und so bei einem der Lanze (11) aufgeprägtem Schweißstrom ein punktueller Schweißstrom über die Punktschweißelektrode (12) zu einer außerhalb des Dampferzeugerrohres angeordneten Gegenelektrode (3) fließt.

2. Widerstandspunktschweißapparat nach Anspruch 1,
**dadurch gekennzeichnet, dass** das Wirkorgan (13) ein Hydraulikzylinder ist.

3. Widerstandspunktschweißapparat nach Anspruch 1 oder 2,
**dadurch gekennzeichnet, dass** die Lanze (11) aus Kupfer ist.

4. Widerstandspunktschweißapparat nach Anspruch 1, 2 oder 3,
**dadurch gekennzeichnet, dass** die Punktschweißelektrode (12) austauschbar ist.

5. Widerstandspunktschweißapparat nach einem der vorherigen Ansprüche,
**dadurch gekennzeichnet, dass** der Schweißkopf (1) am Ende eines mit einer Isolierung (21) umgebenen Schafts (2) angeordnet ist, wobei der Schaft (2) die Zuleitungen für den Schweißkopf führt und eine Länge aufweist, die zumindest der Hälfte der Länge der Dampferzeugerrohre entspricht.

6. Widerstandspunktschweißapparat nach Anspruch 5,
**dadurch gekennzeichnet, dass** eine Schablonenwelle zum Einführen des Einbaukörpers in das Dampferzeugerrohr vorgesehen ist, wobei gleichzeitig mit dem Herausdrehen der Schablonenwelle aus dem Dralleinbaukörper der Schweißkopf (1) zunehmend in das Dampferzeugerrohr eingefahren wird.

7. Widerstandspunktschweißapparat nach Anspruch 5,
**dadurch gekennzeichnet, dass** der Schaft (2) als Schablonenwelle zum Einführen des Einbaukörpers in das Dampferzeugerrohr ausgebildet ist.

## Claims

1. Resistance spot welding apparatus for attaching a turbulence insert to an internal wall of a steam generator pipe, having a welding head (1) which can be introduced into the steam generator pipe and which comprises a substantially cylindrical lance (11) made of an electrically conductive material, a spot welding electrode (12) which projects radially from the lance (11), an active member (13) and an insulating body (14) which lies radially opposite the spot welding electrode (12) and can be moved by the active member (13) toward the internal wall, **characterized in that** the lance (11) is tapered at a defined distance from the end of the welding head such that the insulating body (14) and thus also the spot welding electrode (12), as a result of bending the tapered position, press the turbulence insert against the internal wall of the steam generator pipe when the active member (13) is activated, and hence when a welding current is applied to the lance (11) a punctiform welding current flows via the spot welding electrode (12) to a counter electrode (3) arranged outside the steam generator pipe.

2. Resistance spot welding apparatus according to Claim 1, **characterized in that**
the active member (13) is a hydraulic cylinder.

3. Resistance spot welding apparatus according to Claim 1 or 2,
**characterized in that**
the lance (11) is made of copper.

4. Resistance spot welding apparatus according to Claim 1, 2 or 3,
**characterized in that**
the spot welding electrode (12) is exchangeable.

5. Resistance spot welding apparatus according to one of the preceding claims,
**characterized in that**
the welding head (1) is arranged at the end of a shaft (2) surrounded by insulation (21), wherein the shaft (2) guides the supply lines for the welding head and the length of the shaft corresponds to at least half the length of the steam generator pipe.

6. Resistance spot welding apparatus according to Claim 5,
**characterized in that**
there is provided a template shaft for introducing the insert into the steam generator pipe, wherein at the same time as the template shaft is unscrewed from the turbulence insert, the welding head (1) is increasingly introduced into the steam generator pipe.

7. Resistance spot welding apparatus according to Claim 5,
**characterized in that**
the shaft (2) is formed as a template shaft for introducing the insert into the steam generator pipe.

## Revendications

1. Appareil de soudage par points à résistance pour l'immobilisation d'un insert de tourbillonnement sur une paroi intérieure d'un tube de générateur de vapeur, comprenant une tête (1) de soudage pouvant être introduite dans le tuyau du générateur de vapeur et comprenant une lance (11) constituée dans une grande mesure de manière cylindrique en un matériau conducteur de l'électricité, une électrode (12) de soudage par points en saillie dans la direction radiale de la lance (11), un actionneur (13) et un corps (14) isolant opposé dans la direction radiale à l'électrode (12) de soudage par points et pouvant être déplacé en direction de la paroi intérieure par l'actionneur (13), **caractérisé en ce que** la lance (11) se rétrécit à une distance définie de l'extrémité de la tête de soudage, de manière à ce que le corps (14) isolant et ainsi également l'électrode (12) de soudage par points poussent par flexion de la partie de rétrécissement l'insert de tourbillonnement sur la paroi intérieure du tuyau de générateur de vapeur, lorsque l'actionneur (13) est activé, et ainsi, pour un courant de soudage appliqué à la lance (11), un courant de soudage ponctuel passe en passant par l'électrode (12) de soudage par points vers une électrode (3) antagoniste disposée à l'extérieur du tuyau du générateur de vapeur.

2. Appareil de soudage par points à résistance suivant la revendication 1,
**caractérisé en ce que**
l'actionneur (13) est un vérin hydraulique.

3. Appareil de soudage par points à résistance suivant la revendication 1 ou 2,
**caractérisé en ce que**
la lance (11) est en cuivre.

4. Appareil de soudage par points à résistance suivant la revendication 1, 2 ou 3,
**caractérisé en ce que**
l'électrode (12) de soudage par points est remplaçable.

5. Appareil de soudage par points à résistance suivant l'une des revendications précédentes,
**caractérisé en ce que**
la tête (1) de soudage est disposée à un bout d'un fût (2) entouré d'un isolant (21), le fût (2) guidant les conduits d'apport pour la tête de soudage et ayant une longueur qui correspond au moins à la moitié de la longueur des tuyaux du générateur de vapeur.

6. Appareil de soudage par points à résistance suivant la revendication 5,
**caractérisé en ce que**
il est prévu une broche de gabarit pour introduire l'insert dans le tuyau du générateur de vapeur, la tête (1) de soudage étant enfoncée de plus en plus dans le tuyau du générateur de vapeur en même temps que la broche de gabarit sort de l'insert de tourbillonnement.

7. Appareil de soudage par points à résistance suivant la revendication 5,
**caractérisé en ce que**
le fût (2) est constitué en broche de gabarit pour l'introduction de l'insert dans le tuyau du générateur de vapeur.
